# EUROPEAN PATENT APPLICATION

(11) **EP 2 902 657 A1**
(43) Date of publication of application: **05.08.2015**
(21) Application number: 13842865.1
(22) Date of filing: 24.09.2013
(51) Int. Cl.: F16F 9/34

(54) **SHOCK ABSORBER**

(30) Priority: 27.09.2012 JP 2012214414
(71) Applicant: Kayaba Industry Co., Ltd., Tokyo 105-6111 (JP)
(72) Inventor: TERAOKA, Takashi, Tokyo 105-6111 (JP); INAMITSU, Kazutaka, Tokyo 105-6111 (JP); KAWAKAMI, Hideki, Tokyo 105-6111 (JP)
(74) Representative: Grünecker Patent- und Rechtsanwälte PartG mbB
(86) International application number: PCT/JP2013/075760
(87) International publication number: WO 2014/050832

(57) **Abstract**

A shock absorber includes a cylinder, a piston, a piston rod, an expansion-side passage that allows a fluid to flow only from an expansion-side chamber toward a contraction-side chamber, a contraction-side passage that allows the fluid to flow only from the contraction-side chamber toward the expansion-side chamber, an expansion-side damping valve that applies resistance to a flow of fluid passing through the expansion-side passage, a contraction-side damping valve that applies resistance to a flow of fluid passing through the contraction-side passage, an expansion-side bypass passage that connects the expansion-side chamber to the contraction-side chamber, an expansion-side relief valve that is opened by pressure in the expansion-side chamber so as to open the expansion-side bypass passage, a contraction-side bypass passage that connects the expansion-side chamber to the contraction-side chamber, and a contraction-side relief valve that is opened by pressure in the contraction-side chamber so as to open the contraction-side bypass passage.

## Description

### TECHNICAL FIELD

The present invention relates to a shock absorber.

### BACKGROUND ART

In general, a shock absorber used in a vehicle or the like is configured to comprise a cylinder, a piston that is inserted into the cylinder slidably and divides the interior of the cylinder into an expansion-side chamber and a contraction-side chamber, a piston rod that is inserted into the cylinder movably and connected to the piston, expansion-side and contraction-side ports provided in the piston, an expansion-side leaf valve that is laminated onto the piston in order to open and close the expansion-side port, and a contraction-side leaf valve that is laminated onto the piston in order to open and close the contraction-side port.

In particular, in a damping valve applied to a shock absorber that is incorporated into a suspension of a vehicle, an orifice is provided in parallel with the aforesaid leaf valve so that when a piston speed is in a low speed region, damping force is mainly generated by the orifice, and when the piston speed is in a high speed region, the leaf valve is opened such that damping force is mainly generated by the leaf valve (JP2003-42214A).

As regards a damping characteristic (a characteristic of the damping force relative to the piston speed) of the shock absorber to which the damping valve described above is applied, when the piston speed is in the low speed region, an orifice-dependent characteristic that is proportionate to the square of the piston speed is obtained, and when the piston speed is in the high speed region, the leaf valve opens so that a leaf valve-dependent characteristic that is proportionate to the piston speed is obtained.

Hence, with the damping valve described above, when the piston speed is in the low speed region, a comparatively large damping force can be generated using a damping characteristic in which the orifice causes the damping force to rise, and as a result, vibration of a vehicle body in a resonance frequency band can be damped reliably. Further, when the piston speed is in the high speed region, the leaf valve opens, thereby preventing the damping force from becoming excessive.

### SUMMARY OF INVENTION

In the shock absorber described above, a valve opening pressure can be tuned by modifying a flexural rigidity setting of the leaf valve. However, if the flexural rigidity of the leaf valve is increased with the aim of increasing a vibration damping ability when the piston speed is in the low speed region in order to reduce vibration of the vehicle body in the resonance frequency band, the valve opening pressure increases such that the damping force generated when the piston speed of the shock absorber is in the high speed region becomes excessively large, and as a result, passenger comfort in the vehicle deteriorates. It may therefore be impossible to achieve passenger comfort in the vehicle in all speed regions.

The present invention was created in consideration of the above-described problems, and an object thereof is to provide a shock absorber with which passenger comfort in a vehicle can be improved in all speed regions.

According to one aspect of the present invention, a shock absorber includes a cylinder, a piston that is inserted into the cylinder slidably and divides an interior of the cylinder into an expansion-side chamber and a contraction-side chamber, a piston rod that is inserted into the cylinder movably and connected to the piston, an expansion-side passage that allows a fluid to flow only from the expansion-side chamber toward the contraction-side chamber, a contraction-side passage that allows the fluid to flow only from the contraction-side chamber toward the expansion-side chamber, an expansion-side damping valve that applies resistance to a flow of fluid passing through the expansion-side passage, a contraction-side damping valve that applies resistance to a flow of fluid passing through the contraction-side passage, an expansion-side bypass passage that connects the expansion-side chamber to the contraction-side chamber while bypassing the expansion-side passage, an expansion-side relief valve that is provided midway in the expansion-side bypass passage, and is opened by pressure in the expansion-side chamber so as to open the expansion-side bypass passage, a contraction-side bypass passage that connects the expansion-side chamber to the contraction-side chamber while bypassing the contraction-side passage, and a contraction-side relief valve that is provided midway in the contraction-side bypass passage, and is opened by pressure in the contraction-side chamber so as to open the contraction-side bypass passage.

### BRIEF DESCRIPTION OF DRAWINGS

FIG. 1 is a longitudinal sectional view of a shock absorber according to a first embodiment of the present invention.
FIG. 2 is a view showing damping characteristics of the shock absorber according to the first embodiment of the present invention.
FIG. 3 is a longitudinal sectional view of a shock absorber according to a second embodiment of the present invention.
FIG. 4 is a longitudinal sectional view of a shock absorber according to a third embodiment of the present invention.

### DESCRIPTION OF EMBODIMENTS

### (First Embodiment)

A first embodiment of the present invention will be described below with reference to the attached figures.

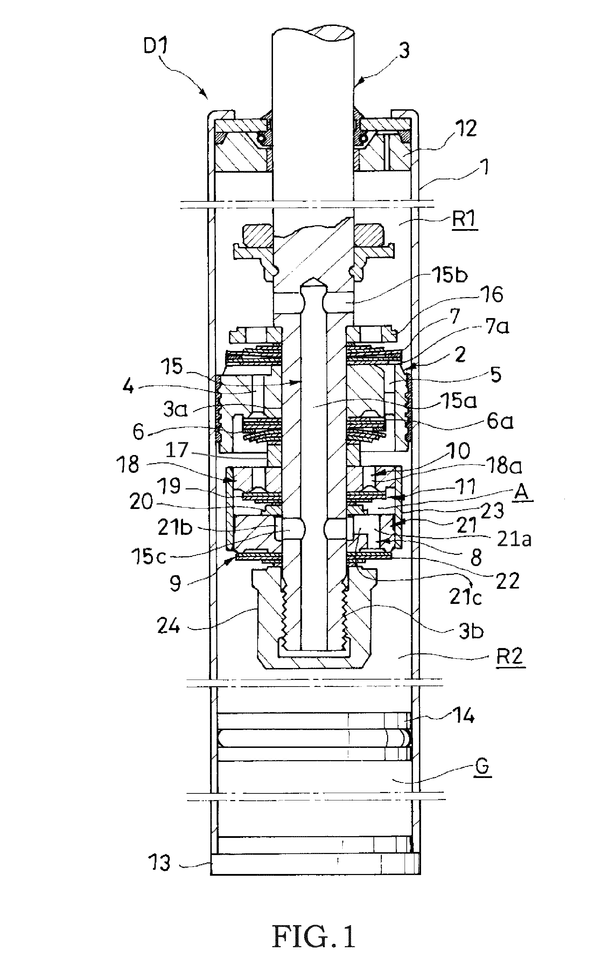

FIG. 1 is a longitudinal sectional view of a shock absorber D1 according to the first embodiment of the present invention.

As shown in FIG. 1, the shock absorber D1 is configured to comprise a cylinder 1, a piston 2 that is inserted into the cylinder 1 slidably and divides the interior of the cylinder 1 into an expansion-side chamber R1 and a contraction-side chamber R2, a piston rod 3 that is inserted into the cylinder 1 movably and connected to the piston 2, an expansion-side passage 4 and a contraction-side passage 5 that connect the expansion-side chamber R1 and the contraction-side chamber R2 to each other, an expansion-side leaf valve 6 serving as an expansion-side damping valve that applies resistance to a flow of fluid passing through the expansion-side passage 4, a contraction-side leaf valve 7 serving as a contraction-side damping valve that applies resistance to a flow of fluid passing through the contraction-side passage 5, an expansion-side bypass passage 8 that connects the expansion-side chamber R1 to the contraction-side chamber R2 while bypassing the expansion-side passage 4, an expansion-side relief valve 9 that is provided midway in the expansion-side bypass passage 8 and is opened by pressure in the expansion-side chamber R1 so as to open the expansion-side bypass passage 8, a contraction-side bypass passage 10 that connects the expansion-side chamber R1 to the contraction-side chamber R2 while bypassing the contraction-side passage 5, and a contraction-side relief valve 11 that is provided midway in the contraction-side bypass passage 10 and is opened by pressure in the contraction-side chamber R2 so as to open the contraction-side bypass passage 10. The shock absorber D 1 is interposed between a vehicle body and an axle of a vehicle, and suppresses vibration of the vehicle body by generating damping force. It should be noted that the expansion-side chamber R1 contracts when the vehicle body and the axle separate from each other such that the shock absorber D1 performs an expansion operation, and the contraction-side chamber R2 contracts when the vehicle body and the axle approach each other such that the shock absorber D1 performs a contraction operation.

An annular head member 12 is attached to an upper end, in FIG. 1, of the cylinder 1, and a lower end of the cylinder 1 is closed by a cap 13. The piston rod 3 is axially supported by the head member 12 so as to be free to slide, and an upper end thereof projects to the outside of the cylinder 1. In other words, the shock absorber D1 is a so-called single rod type shock absorber. A liquid such as working oil is charged into the expansion-side chamber R1 and the contraction-side chamber R2. Further, since the shock absorber D1 is a single rod type shock absorber in which the piston rod 3 is inserted only into the expansion-side chamber R1, a sliding partition wall 14 that slides against an inner periphery of the cylinder 1 so as to define a gas chamber G below the contraction-side chamber R2 is provided in a lower portion of the cylinder 1 in order to compensate for a volume by which the piston rod 3 enters and exits the cylinder 1. The shock absorber D1 thus forms a single cylinder type shock absorber.

To compensate for the volume by which the piston rod 3 enters and exits the cylinder 1, a reservoir may be provided on the exterior of the cylinder 1 instead of providing the gas chamber G in the cylinder 1. In a case where a reservoir is provided on the exterior the cylinder 1, an outer cylinder may be provided to cover an outer periphery of the cylinder 1 so that the reservoir is formed between the cylinder 1 and the outer cylinder, whereby the shock absorber D1 becomes a multi-cylinder type shock absorber, or a tank forming the cylinder may be provided separately to the cylinder 1. Further, to increase the pressure in the contraction-side chamber R2 during the contraction operation of the shock absorber D1, a partitioning member that partitions the contraction-side chamber R2 from the reservoir and a base valve provided in the partitioning member in order to apply resistance to a flow of liquid travelling from the contraction-side chamber R2 toward the reservoir may be provided. It should be noted that a liquid such as water or an aqueous solution, for example, may be used in the expansion-side chamber R1 and the contraction-side chamber R2 instead of working oil. Moreover, a gas may be used instead of a liquid. In other words, any fluid may be charged therein. Furthermore, the shock absorber D1 may be a double rod type shock absorber rather than a single rod type shock absorber.

The respective parts will be described in detail below. As shown in FIG. 1, a small diameter portion 3a is formed on an end portion of the piston rod 3 on a side that is inserted into the cylinder 1, and a screw portion 3b is formed on a tip end of the small diameter portion 3a. A bracket (not shown) that can be connected to one of the vehicle body and the axle of the vehicle is provided on an end portion of the piston rod 3 on an opposite side to the small diameter portion 3a, and a bracket (not shown) that can be connected to the other of the vehicle body and the axle of the vehicle, to which the bracket of the piston rod 3 is not connected, is provided on the cap 13. As a result, the shock absorber D1 can be interposed between the vehicle body and the axle of the vehicle.

Further, a shared passage 15 is provided in the piston rod 3. The shared passage 15 is constituted by a vertical hole 15a opened in the tip end of the small diameter portion 3a so as to extend in an axial direction of the piston rod 3, a first lateral hole 15b opened above the small diameter portion 3a in FIG. 1 so as to connect the vertical hole 15a to the expansion-side chamber R1, and a second lateral hole 15c opened in a side of the small diameter portion 3a so as to communicate with the vertical hole 15a.

The piston 2 is formed in an annular shape, and the small diameter portion 3a of the piston rod 3 is inserted into an inner peripheral side thereof. Further, the expansion-side passage 4 and the contraction-side passage 5 that connect the expansion-side chamber R1 and the contraction-side chamber R2 to each other are provided in the piston 2. A lower end of the expansion-side passage 4 in FIG. 1 is closed by the expansion-side leaf valve 6 serving as the expansion-side damping valve, and an upper end of the contraction-side passage 5 in FIG. 1 is closed by the contraction-side leaf valve 7 serving as the contraction-side damping valve.

In the present embodiment, the expansion-side leaf valve 6 and the contraction-side leaf valve 7 are laminated leaf valves formed by laminating annular leaf valves, and the small diameter portion 3a of the piston rod 3 is inserted into respective inner peripheral sides thereof. An annular valve stopper 16 that limits a deflection amount of the contraction-side leaf valve 7 is laminated onto an upper side of the contraction-side leaf valve 7 in FIG. 1.

When the shock absorber D1 expands, the expansion-side leaf valve 6 is opened by a differential pressure between the expansion-side chamber R1 and the contraction-side chamber R2 so as to apply resistance to a flow of liquid moving through the expansion-side passage 4 from the expansion-side chamber R1 into the contraction-side chamber R2. When the shock absorber D1 contracts, the expansion-side passage 4 is closed. Hence, the expansion-side passage 4 functions as a one-way passage that allows the liquid to flow only from the expansion-side chamber R1 toward the contraction-side chamber R2. When the shock absorber D1 contracts, the contraction-side leaf valve 7 is opened by the differential pressure between the expansion-side chamber R1 and the contraction-side chamber R2 so as to apply resistance to a flow of liquid moving through the contraction-side passage 5 from the contraction-side chamber R2 into the expansion-side chamber R1. When the shock absorber D1 expands, the contraction-side passage 5 is closed. Hence, the contraction-side passage 5 functions as a one-way passage that allows the liquid to flow only from the contraction-side chamber R2 toward the expansion-side chamber R1.

In other words, the expansion-side leaf valve 6 functions as an expansion-side damping valve that generates expansion-side damping force when the shock absorber D1 expands, and the contraction-side leaf valve 7 functions as a contraction-side damping valve that generates contraction-side damping force when the shock absorber D1 contracts. Further, even when the expansion-side passage 4 and the contraction-side passage 5 are closed by the expansion-side leaf valve 6 and the contraction-side leaf valve 7, the expansion-side chamber R1 and the contraction-side chamber R2 communicate with each other via conventional orifices formed from cutouts 6a, 7a provided in respective outer peripheries of the expansion-side leaf valve 6 and the contraction-side leaf valve 7. Instead of providing the cutouts 6a, 7a in the respective outer peripheries of the expansion-side leaf valve 6 and the contraction-side leaf valve 7, the orifices may be formed by, for example, providing recessed portions in respective valve seats on which the expansion-side leaf valve 6 and the contraction-side leaf valve 7 are seated, or the like.

Instead of providing the orifices and the leaf valves in parallel, the expansion-side damping valve and the contraction-side damping valve may take a different configuration, for example a configuration in which chokes and the leaf valves are provided in parallel. Further, a number of laminated leaves of the leaf valves may be set as desired.

Furthermore, the contraction-side relief valve 11 that allows the liquid to flow only through the contraction-side bypass passage 10 from the contraction-side chamber R2 toward the expansion-side chamber R1, and the expansion-side relief valve 9 that allows the liquid to flow only through the expansion-side bypass passage 8 from the expansion-side chamber R1 toward the contraction-side chamber R2 are provided below the expansion-side relief valve 6 in FIG. 1 and attached in that order to the outer periphery of the small diameter portion 3a of the piston rod 3.

The contraction-side relief valve 11 is attached to the piston rod 3 on a lower side, or in other words the contraction-side chamber R2 side, of the piston 2 in FIG. 1. The contraction-side relief valve 11 comprises an annular contraction-side valve disc 18 that is attached to the small diameter portion 3a of the piston rod 3 on a lower side, in FIG. 1, of an annular spacer 17 laminated onto the expansion-side leaf valve 6, and an annular contraction-side valve body 19 that is constituted by a laminated leaf valve laminated onto a lower side of the contraction-side valve disc 18. The contraction-side valve disc 18 is formed in annular shape and comprises a contraction-side bypass port 18a that penetrates the contraction-side valve disc 18 vertically such that an upper end thereof in FIG. 1 opens onto the contraction-side chamber R2. Further, the contraction-side valve body 19 is laminated onto a lower surface, in FIG. 1, of the contraction-side valve disc 18, and an inner periphery thereof is fixed to the piston rod 3. The contraction-side valve body 19 is thus capable of opening and closing a lower side open end of the contraction-side bypass port 18a.

The expansion-side relief valve 9 is attached to the piston rod 3 on a lower side, or in other words the contraction-side chamber R2 side, of the contraction-side relief valve 11 in FIG. 1. The expansion-side relief valve 9 comprises an annular expansion-side valve disc 21 that is attached to the small diameter portion 3a of the piston rod 3 on a lower side, in FIG. 1, of the contraction-side valve body 19 via an annular spacer 20, and an annular expansion-side valve body 22 that is constituted by a laminated leaf valve laminated onto a lower side of the expansion-side valve disc 21. The expansion-side valve disc 21 is formed in annular shape and comprises an expansion-side bypass port 21 a that penetrates the expansion-side valve disc 21 vertically such that a lower end thereof in FIG. 1 opens onto the contraction-side chamber R2, an annular groove 21b provided in an inner peripheral side, and a connecting passage 21c that connects the annular groove 21b to the expansion-side bypass port 21a. When the expansion-side valve disc 21 is attached to the small diameter portion 3a of the piston rod 3 in the manner described above, the annular groove 21b opposes the second lateral hole 15c. The expansion-side valve body 22 is laminated onto a lower surface, in FIG. 1, of the expansion-side valve disc 21, and an inner periphery thereof is fixed to the piston rod 3. The expansion-side valve body 22 is thus capable of opening and closing a lower side open end of the expansion-side bypass port 21a.

Furthermore, a tubular partition wall 23 is fitted to respective outer peripheries of the contraction-side valve disc 18 and the expansion-side valve disc 21 so that a space A between the contraction-side valve disc 18 and the expansion-side valve disc 21 is partitioned from the contraction-side chamber R2. As described above, an outlet end of the second lateral hole 15c provided in the small diameter portion 3a of the piston rod 3 opposes the annular groove 21b of the expansion-side valve disc 21. Hence, the space A communicates with the shared passage 15 via the expansion-side bypass port 21a, and eventually communicates with the expansion-side chamber R1 via the shared passage 15. It should be noted that the space A may be connected to the shared passage 15 by providing a through hole in the spacer 20 and aligning the through hole with the second lateral hole 15c.

By connecting the space A to the expansion-side chamber R1 in this manner, when the pressure in the contraction-side chamber R2 increases beyond the pressure in the expansion-side chamber R1 so that the differential pressure between the two reaches a valve opening pressure of the contraction-side valve body 19, the contraction-side valve body 19 receives the pressure of the contraction-side chamber R2, which acts thereon from the contraction-side bypass port 18a, and deflects as a result, thereby opening the contraction-side bypass port 18a. Accordingly, the contraction-side chamber R2 and the expansion-side chamber R1 communicate via the contraction-side bypass port 18a, the space A, and the shared passage 15. When the pressure in the contraction-side chamber R2 is higher than the pressure in the expansion-side chamber R1, the expansion-side valve body 22 is pressed against the expansion-side valve disc 21 by the pressure in the contraction-side chamber R2, and therefore the expansion-side bypass port 21 a remains closed. As is evident from the above description, in the present embodiment, the contraction-side bypass passage 10 is formed from the contraction-side bypass port 18a, the space A, the shared passage 15, a part of the expansion-side bypass port 21 a, the annular groove 21 b, and the connecting passage 21 c. It should be noted that in the present embodiment, a valve opening pressure of the contraction-side relief valve 11 is set to be higher than a valve opening pressure at which the contraction-side leaf valve 7 deflects so as to open the contraction-side passage 5.

Conversely, when the pressure in the expansion-side chamber R1 increases beyond the pressure in the contraction-side chamber R2 so that the differential pressure between the two reaches a valve opening pressure of the expansion-side valve body 22, the expansion-side valve body 22 receives the pressure of the expansion-side chamber R1, which acts thereon from the expansion-side bypass port 21 a, and deflects as a result, thereby opening the expansion-side bypass port 21a. Accordingly, the contraction-side chamber R2 and the expansion-side chamber R1 communicate via the expansion-side bypass port 21a, the space A, and the shared passage 15. When the pressure in the expansion-side chamber R1 is higher than the pressure in the contraction-side chamber R2, the contraction-side valve body 19 is pressed against the contraction-side valve disc 18 by the pressure in the expansion-side chamber R1, and therefore the contraction-side bypass port 18a remains closed. As is evident from the above description, in the present embodiment, the expansion-side bypass passage 8 is formed from the expansion-side bypass port 21 a, the space A, the shared passage 15, the annular groove 21b, and the connecting passage 21c. It should be noted that in the present embodiment, a valve opening pressure of the expansion-side relief valve 9 is set to be higher than a valve opening pressure at which the expansion-side leaf valve 6 deflects so as to open the expansion-side passage 4.

When the contraction-side relief valve 11 and the expansion-side relief valve 9 configured as described above are attached in that order to the lower side of the expansion-side leaf valve 6 in FIG. 1, and a cap nut-shaped piston nut 24 is screwed to the screw portion 3b provided on the tip end of the piston rod 3, the valve stopper 16, the contraction-side leaf valve 7, the piston 2, the expansion-side leaf valve 6, the spacer 17, the contraction-side relief valve 11, the spacer 20, the tubular partition wall 23, and the expansion-side relief valve 9 are fixed to the small diameter portion 3a of the piston rod 3.

Further, when the piston nut 24 is screwed to the tip end of the piston rod 3, the vertical hole 15a opened in the tip end of the piston rod 3 is closed. As a result, the expansion-side bypass passage 8 is prevented from connecting the expansion-side chamber R1 to the contraction-side chamber R2 without passing through the expansion-side relief valve 9, and the contraction-side bypass passage 10 is prevented from connecting the expansion-side chamber R1 to the contraction-side chamber R2 without passing through the contraction-side relief valve 11. It should be noted that by driving in a ball or providing a plug to close the vertical hole 15a below the second lateral hole 15c of the piston rod 3 in FIG. 1, the piston nut 24 may be formed from a normal annular nut instead of a cap nut. Although not shown in the figures, when a plug is used, a steel ball, for example, may be press-fitted into the open end of the vertical hole 15a and the open end may be swaged to prevent the steel ball from becoming dislodged.

Next, operations of the shock absorber D1 will be described. First, a case in which the piston 2 moves upward in FIG. 1 relative to the cylinder 1, or in other words a case in which the shock absorber D1 expands, will be described.

When the piston 2 moves upward in FIG. 1 relative to the cylinder 1, the expansion-side chamber R1 contracts and the contraction-side chamber R2 expands, leading to an increase in the pressure in the contracting expansion-side chamber R1 and a reduction in the pressure in the expanding contraction-side chamber R2. When a piston speed is low, the differential pressure between the expansion-side chamber R1 and the contraction-side chamber R2 does not reach the valve opening pressures of the expansion-side leaf valve 6 and the expansion-side relief valve 9, and therefore the expansion-side leaf valve 6 and the expansion-side relief valve 9 do not open. Accordingly, the liquid moves from the expansion-side chamber R1 into the contraction-side chamber R2 through the cutout 6a and the cutout 7a serving as orifices.

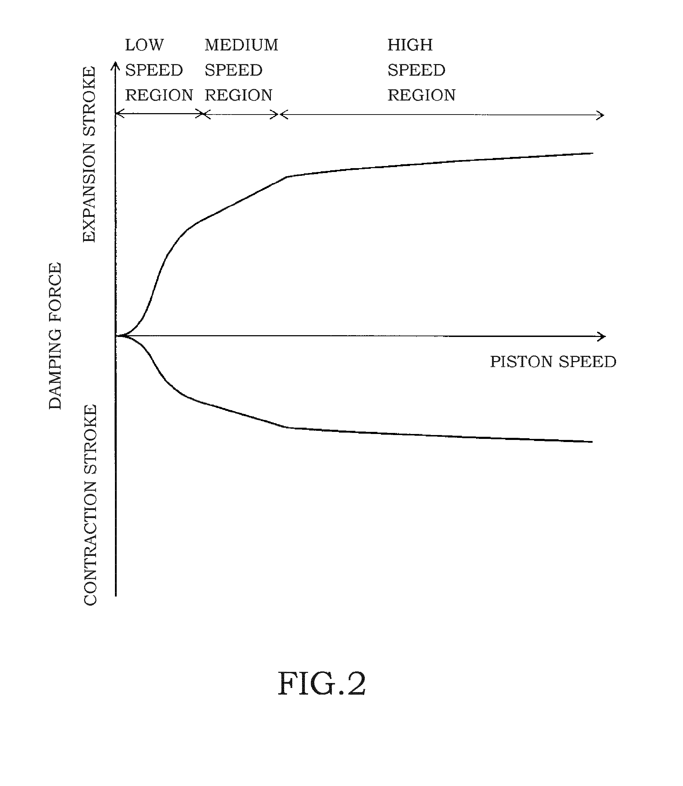

As shown in FIG. 2, therefore, a damping characteristic of the shock absorber D1 when the piston speed is in a low speed region during an expansion stroke is an orifice-dependent square characteristic according to which damping force is generated in proportion to the square of the piston speed.

When the piston speed reaches a medium speed exceeding the low speed, the differential pressure between the expansion-side chamber R1 and the contraction-side chamber R2 reaches the valve opening pressure of the expansion-side leaf valve 6, but does not reach the valve opening pressure of the expansion-side relief valve 9, and therefore only the expansion-side leaf valve 6 opens. Accordingly, the liquid moves from the expansion-side chamber R1 into the contraction-side chamber R2 through an annular gap formed between the piston 2 and the expansion-side leaf valve 6.

As shown in FIG. 2, therefore, the damping characteristic of the shock absorber D1 when the piston speed is in a medium speed region during the expansion stroke is a characteristic that is dependent on the expansion-side leaf valve 6 serving as the expansion-side damping valve, according to which damping force is generated substantially in proportion to the piston speed, and a damping coefficient is lower than when the piston speed is in the low speed region.

When the piston speed reaches a high speed exceeding the medium speed, the differential pressure between the expansion-side chamber R1 and the contraction-side chamber R2 reaches not only the valve opening pressure of the expansion-side leaf valve 6 but also the valve opening pressure of the expansion-side relief valve 9, and therefore both the expansion-side leaf valve 6 and the expansion-side relief valve 9 open. Accordingly, the liquid moves from the expansion-side chamber R1 into the contraction-side chamber R2 through not only the expansion-side passage 4 but also the expansion-side bypass passage 8.

As shown in FIG. 2, therefore, the damping characteristic of the shock absorber D1 when the piston speed is in a high speed region during the expansion stroke has a lower damping coefficient than when the piston speed is in the medium speed region since both the expansion-side passage 4 and the expansion-side bypass passage 8 are open.

Next, a case in which the piston 2 moves downward in FIG. 1 relative to the cylinder 1, or in other words a case in which the shock absorber D1 contracts, will be described.

When the piston 2 moves downward in FIG. 1 relative to the cylinder 1, the contraction-side chamber R2 contracts and the expansion-side chamber R1 expands, leading to an increase in the pressure in the contracting contraction-side chamber R2 and a reduction in the pressure in the expanding expansion-side chamber R1. When the piston speed is low, the differential pressure between the contraction-side chamber R2 and the expansion-side chamber R1 does not reach the valve opening pressures of the contraction-side leaf valve 7 and the contraction-side relief valve 11, and therefore the contraction-side leaf valve 7 and the contraction-side relief valve 11 do not open. Accordingly, the liquid moves from the contraction-side chamber R2 into the expansion-side chamber R1 through the cutout 6a and the cutout 7a functioning as orifices.

As shown in FIG. 2, therefore, the damping characteristic of the shock absorber D1 when the piston speed is in the low speed region during a contraction stroke is an orifice-dependent square characteristic according to which damping force is generated in proportion to the square of the piston speed.

When the piston speed reaches a medium speed exceeding the low speed, the differential pressure between the contraction-side chamber R2 and the expansion-side chamber R1 reaches the valve opening pressure of the contraction-side leaf valve 7, but does not reach the valve opening pressure of the contraction-side relief valve 11, and therefore only the contraction-side leaf valve 7 opens. Accordingly, the liquid moves from the contraction-side chamber R2 into the expansion-side chamber R1 through an annular gap formed between the piston 2 and the contraction-side leaf valve 7.

As shown in FIG. 2, therefore, the damping characteristic of the shock absorber D1 when the piston speed is in the medium speed region during the contraction stroke is a characteristic that is dependent on the contraction-side leaf valve 7 serving as the contraction-side damping valve, according to which damping force is generated substantially in proportion to the piston speed, and the damping coefficient is lower than when the piston speed is in the low speed region.

When the piston speed reaches a high speed exceeding the medium speed, the differential pressure between the contraction-side chamber R2 and the expansion-side chamber R1 reaches not only the valve opening pressure of the contraction-side leaf valve 7 but also the valve opening pressure of the contraction-side relief valve 11, and therefore both the contraction-side leaf valve 7 and the contraction-side relief valve 11 open. Accordingly, the liquid moves from the contraction-side chamber R2 into the expansion-side chamber R1 through not only the contraction-side passage 5 but also the contraction-side bypass passage 10.

As shown in FIG. 2, therefore, the damping characteristic of the shock absorber D1 when the piston speed is in the high speed region during the contraction stroke has a lower damping coefficient than when the piston speed is in the medium speed region since both the contraction-side passage 5 and the contraction-side bypass passage 10 are open.

Hence, the shock absorber D1 according to the present embodiment comprises the expansion-side bypass passage 8, the expansion-side relief valve 9, the contraction-side bypass passage 10, and the contraction-side relief valve 11 so that when the piston speed is in the high speed region, the expansion-side relief valve 9 and the contraction-side relief valve 11 are opened. As a result, excessive damping force can be suppressed.

Moreover, even when the vibration damping ability obtained when the piston speed is in the low speed region is increased, excessive damping force while the piston speed is in the high speed region can be suppressed independently thereof. Hence, a vehicle body attitude can be stabilized reliably while the piston speed is in the low speed region, and vibration occurring when the vehicle passes over a projection or a recess during travel can be isolated so that transmission of the vibration to the vehicle body can be suppressed.

With the shock absorber D1 according to the present embodiment, therefore, passenger comfort can be realized in the vehicle in all speed regions.

Further, in the present embodiment, the expansion-side bypass passage 8 and the contraction-side bypass passage 10 are formed to include the shared passage 15 provided in the piston rod 3, and therefore a passage for the expansion-side bypass passage 8 and a passage for the contraction-side bypass passage 10 do not have to be provided independently in the piston rod 3. As a result, the piston rod 3 can be constructed easily while maintaining sufficient strength.

Furthermore, by making the valve opening pressure of the expansion-side relief valve 9 higher than the valve opening pressure of the expansion-side damping valve and making the valve opening pressure of the contraction-side relief valve 11 higher than the valve opening pressure of the contraction-side damping valve, the damping force generated when the piston speed is in the low, medium, and high speed regions can be increased so that vehicle body vibration can be damped reliably and wheel tramp of the vehicle wheels can be reduced. Furthermore, excessive damping force while the piston speed is in the high speed region can be suppressed, and as a result, favorable passenger comfort can be realized in the vehicle. It should be noted that the valve opening pressure of the expansion-side relief valve 9 may be set to be equal to or lower than the valve opening pressure of the expansion-side damping valve, and the valve opening pressure of the contraction-side relief valve 11 may be set to be equal to or lower than the valve opening pressure of the contraction-side damping valve. Even with these settings, however, the above effects of the shock absorber D1 according to the present embodiment are not lost.

### (Second Embodiment)

Next, a second embodiment of the present invention will be described.

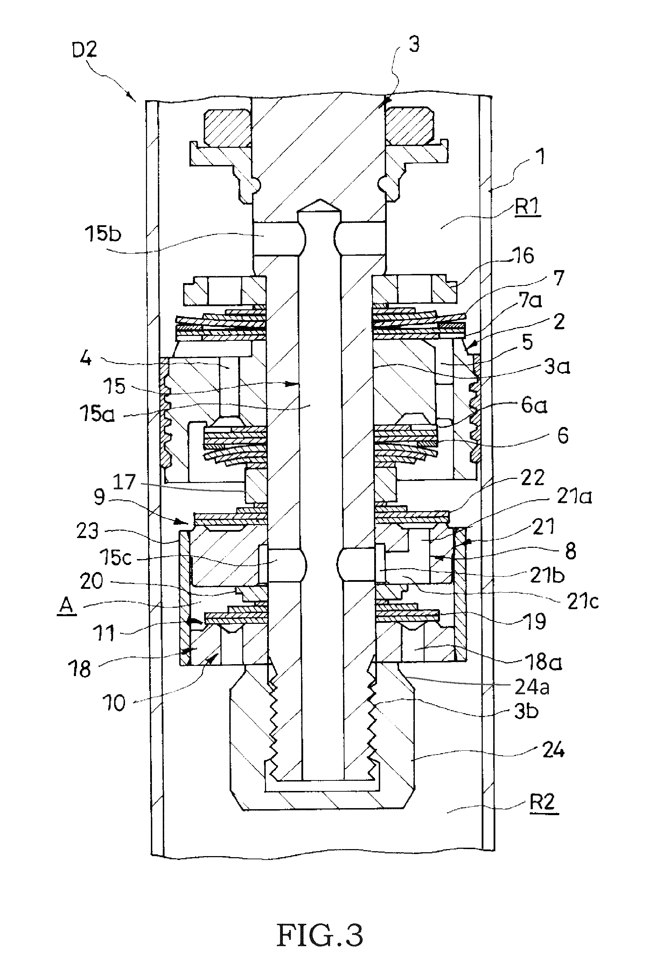

FIG. 3 is a longitudinal sectional view of a shock absorber D2 according to the second embodiment of the present invention.

The shock absorber D2 differs from the shock absorber D1 according to the first embodiment in that the expansion-side relief valve 9 and the contraction-side relief valve 11 are attached to the piston rod 3 in reverse order and in opposite attachment directions. All other configurations of the shock absorber D2 are shared with the shock absorber D1 according to the first embodiment. Hence, identical configurations have been allocated identical reference symbols, and description thereof has been omitted. Differences with the first embodiment will be described in detail below.

As described above, in the shock absorber D2, the expansion-side relief valve 9 and the contraction-side relief valve 11 of the shock absorber D1 are disposed in reverse order and attached in opposite directions.

In the shock absorber D1, as shown in FIG. 1, the contraction-side relief valve 11 is attached to the lower side of the expansion-side relief valve 6 so that the contraction-side valve body 19 is disposed below the contraction-side valve disc 18, whereupon the expansion-side relief valve 9 is attached to the lower side of the contraction-side relief valve 11 so that the expansion-side valve body 22 is disposed below the expansion-side valve disc 21. In the shock absorber D2, as shown in FIG. 3, on the other hand, the expansion-side relief valve 9 is attached to the lower side of the expansion-side leaf valve 6 so that the expansion-side valve body 22 is disposed above the expansion-side valve disc 21, whereupon the contraction-side relief valve 11 is attached to the lower side of the expansion-side relief valve 9 and fixed by the piston nut 24 so that the contraction-side valve body 19 is disposed above the contraction-side valve disc 18.

It should be noted that a tapered chamfered portion 24a is formed on an upper end outer periphery of the piston nut 24 to ensure that a lower side opening portion of the contraction-side bypass port 18a of the contraction-side valve disc 18 is not closed. Otherwise, the piston nut 24 has identical functions and an identical structure to the piston nut 24 of the shock absorber D1.

In the shock absorber D2, by disposing the expansion-side relief valve 9 and the contraction-side relief valve 11 as described above, an incomplete thread part on an upper end of the screw portion 3b of the piston rod 3 can be opposed to the contraction-side valve disc 18 without affecting a radial direction position of the leaf valve constituting the contraction-side valve body 19. In the shock absorber D1, on the other hand, when the incomplete thread part of the screw portion 3b opposes the leaf valve constituting the contraction-side valve body 19, gaps are formed between the incomplete thread part and the inner peripheries of the respective leaf valves, and as a result, the leaf valves play relative to the piston rod 3, making radial direction positioning thereof difficult. It is therefore necessary to ensure that the incomplete thread part on the upper end of the screw portion 3b does not overlap with the contraction-side valve body 19. When the incomplete thread part on the upper end of the screw portion 3b overlaps with the contraction-side valve body 19 so that the incomplete thread part opposes the inner periphery of the contraction-side valve body 19, the radial direction position of the leaf valve constituting the contraction-side valve body 19 may not be disposed in a predetermined position, and as a result, damping force may not be generated as designed when the contraction-side relief valve 11 opens.

With the structure of the shock absorber D1, the position of the contraction-side valve body 19 deviates in a vertical direction according to the number of laminated leaves of the leaf valves respectively constituting the expansion-side leaf valve 6, the contraction-side leaf valve 7, and the expansion-side valve body 22, and respective thicknesses of the piston 2, the spacers 17, 20, and the valve stopper 16, and therefore measures are taken to ensure that the incomplete thread part on the upper end of the screw portion 3b does not overlap with the contraction-side valve body 19 even when the number of laminated leaves of the leaf valves respectively constituting the expansion-side leaf valve 6, the contraction-side leaf valve 7, and the expansion-side valve body 22 and the respective thicknesses of the piston 2, the spacers 17, 20, and the valve stopper 16 are maximized. With the structure of the shock absorber D1, therefore, the incomplete thread part on the upper end of the screw portion 3b must be positioned further toward the lower side than with the structure of the shock absorber D2. In other words, with the shock absorber D2, the upper end of the screw portion 3b can be disposed further toward the upper side than with the shock absorber D1, and therefore a length of the small diameter portion 3a of the piston rod 3 can be shortened, making it easier to secure expansion and contraction stroke lengths than with the shock absorber D1. It should be noted that in the shock absorber D2, since the expansion-side relief valve 9 and the contraction-side relief valve 11 are disposed in reverse relative to the shock absorber D1, similar actions and effects to those of the shock absorber D1, described above, are naturally obtained.

### (Third Embodiment)

Next, a third embodiment of the present invention will be described.

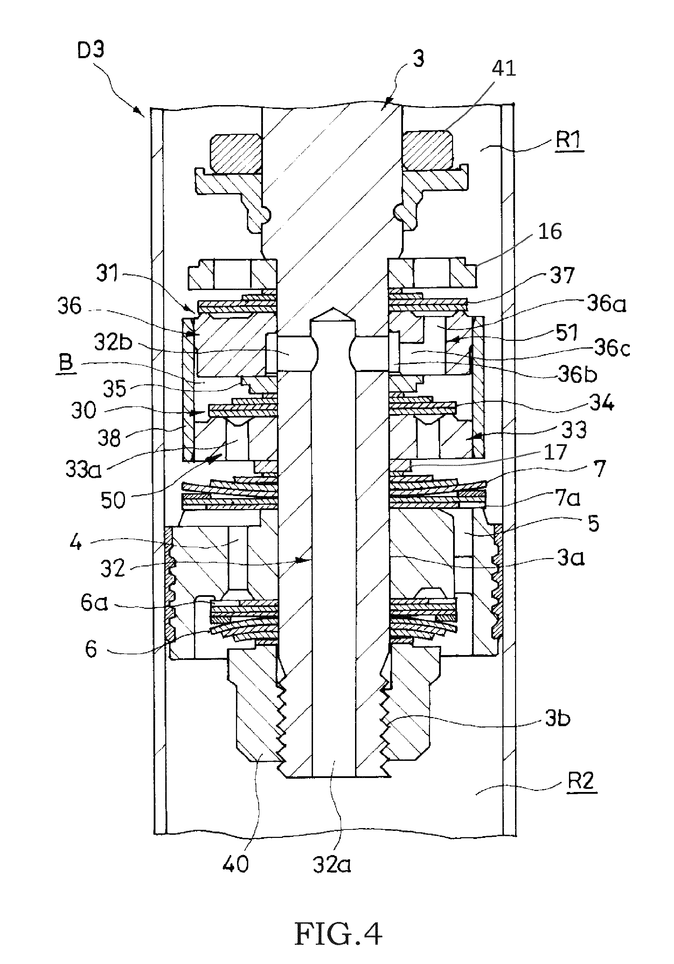

FIG. 4 is a longitudinal sectional view of a shock absorber D3 according to the third embodiment of the present invention.

The shock absorber D3 differs from the shock absorber D 1 according to the first embodiment in that an expansion-side relief valve 30 and a contraction-side relief valve 31 are disposed on the expansion-side chamber R1 side of the piston 2. Identical configurations to the first embodiment have been allocated identical reference symbols, and description thereof has been omitted. Differences with the first embodiment will be described in detail below.

The piston rod 3 of the shock absorber D3 comprises a shared passage 32 formed from a vertical hole 32a and a lateral hole 32b opened in a position near an upper end, in FIG. 4, of the small diameter portion 3a of the piston rod 3. The vertical hole 32a opens onto the contraction-side chamber R2 so that the shared passage 32 communicates with the contraction-side chamber R2 at all times. In this case, there is no need to close the vertical hole 32a, and therefore a typical annular piston nut 40 can be used instead of a cap nut.

The contraction-side relief valve 31 and the expansion-side relief valve 30 are attached in that order to the small diameter portion 3a of the piston rod 3 on the upper side of the contraction-side leaf valve 7 in FIG. 4.

The expansion-side relief valve 30 is attached to the piston rod 3 on an upper side of the piston 2 in FIG. 4, or in other words on the expansion-side chamber R1 side. The expansion-side relief valve 30 comprises an annular expansion-side valve disc 33 that is attached to the small diameter portion 3a of the piston rod 3 on an upper side, in FIG. 4, of the contraction-side leaf valve 7, and an annular expansion-side valve body 34 constituted by a laminated leaf valve laminated onto an upper side of the expansion-side valve disc 33. The expansion-side valve disc 33 is formed in annular shape and comprises an expansion-side bypass port 33a that penetrates the expansion-side valve disc 33 vertically such that a lower end thereof in FIG. 4 opens onto the expansion-side chamber R1. Further, the expansion-side valve body 34 is laminated onto an upper surface, in FIG. 4, of the expansion-side valve disc 33, and an inner periphery thereof is fixed to the piston rod 3. The expansion-side valve body 34 is thus capable of opening and closing an upper side open end of the expansion-side bypass port 33a.

Further, the contraction-side relief valve 31 is attached to the piston rod 3 on an upper side, in FIG. 4, of the expansion-side relief valve 30, or in other words on the expansion-side chamber R1 side. The contraction-side relief valve 31 comprises an annular contraction-side valve disc 36 that is attached to the small diameter portion 3a of the piston rod 3 on an upper side, in FIG. 4, of the expansion-side valve body 34 via an annular spacer 35, and an annular contraction-side valve body 37 that is constituted by a laminated leaf valve laminated onto an upper side of the contraction-side valve disc 36. The contraction-side valve disc 36 is formed in annular shape and comprises a contraction-side bypass port 36a that penetrates the contraction-side valve disc 36 vertically such that an upper end thereof in FIG. 4 opens onto the expansion-side chamber R1, an annular groove 36b provided in an inner peripheral side, and a connecting passage 36c that connects the annular groove 36b to the contraction-side bypass port 36a. When the contraction-side valve disc 36 is attached to the small diameter portion 3a of the piston rod 3 in the manner described above, the annular groove 36b opposes the lateral hole 32b. The contraction-side valve body 37 is laminated onto an upper surface, in FIG. 4, of the contraction-side valve disc 36, and an inner periphery thereof is fixed to the piston rod 3. The contraction-side valve body 37 is thus capable of opening and closing an upper side open end of the contraction-side bypass port 36a.

Furthermore, a tubular partition wall 38 is fitted to respective outer peripheries of the expansion-side valve disc 33 and the contraction-side valve disc 36 so that a space B between the expansion-side valve disc 33 and the contraction-side valve disc 36 is partitioned from the expansion-side chamber R1. As described above, an outlet end of the lateral hole 32b provided in the small diameter portion 3a of the piston rod 3 opposes the annular groove 36b in the contraction-side valve disc 36. Hence, the space B communicates with the shared passage 32 via the contraction-side bypass port 36a, and eventually communicates with the contraction-side chamber R2 via the shared passage 32. It should be noted that the space B may be connected to the shared passage 32 by providing a through hole in the spacer 35 and aligning the through hole with the lateral hole 32b.

By connecting the space B to the contraction-side chamber R2 in this manner, when the pressure in the contraction-side chamber R2 increases beyond the pressure in the expansion-side chamber R1 so that the differential pressure between the two reaches a valve opening pressure of the contraction-side valve body 37, the contraction-side valve body 37 receives the pressure of the contraction-side chamber R2, which acts thereon from the contraction-side bypass port 36a, and deflects as a result, thereby opening the contraction-side bypass port 36a. Accordingly, the contraction-side chamber R2 and the expansion-side chamber R1 communicate via the contraction-side bypass port 36a, the space B, and the shared passage 32. When the pressure in the contraction-side chamber R2 is higher than the pressure in the expansion-side chamber R1, the expansion-side valve body 34 is pressed against the expansion-side valve disc 33 by the pressure in the contraction-side chamber R2, and therefore the expansion-side bypass port 33a remains closed. As is evident from the above description, in the present embodiment, a contraction-side bypass passage 51 is formed from the contraction-side bypass port 36a, the space B, the shared passage 32, the annular groove 36b, and the connecting passage 36c. It should be noted that in the present embodiment, a valve opening pressure of the contraction-side relief valve 31 is set to be higher than the valve opening pressure at which the contraction-side leaf valve 7 deflects so as to open the contraction-side passage 5.

Conversely, when the pressure in the expansion-side chamber R1 increases beyond the pressure in the contraction-side chamber R2 so that the differential pressure between the two reaches a valve opening pressure of the expansion-side valve body 34, the expansion-side valve body 34 receives the pressure of the expansion-side chamber R1, which acts thereon from the expansion-side bypass port 33a, and deflects as a result, thereby opening the expansion-side bypass port 33a. Accordingly, the contraction-side chamber R2 and the expansion-side chamber R1 communicate via the expansion-side bypass port 33a, the space B, and the shared passage 32. When the pressure in the expansion-side chamber R1 is higher than the pressure in the contraction-side chamber R2, the contraction-side valve body 37 is pressed against the contraction-side valve disc 36 by the pressure in the expansion-side chamber R1, and therefore the contraction-side bypass port 36a remains closed. As is evident from the above description, in the present embodiment, an expansion-side bypass passage 50 is formed from the expansion-side bypass port 33a, the space B, the shared passage 32, a part of the contraction-side bypass port 36a, the annular groove 36b, and the connecting passage 36c. It should be noted that in the present embodiment, a valve opening pressure of the expansion-side relief valve 30 is set to be higher than the valve opening pressure at which the expansion-side leaf valve 6 deflects so as to open the expansion-side passage 4.

The valve stopper 16, the contraction-side relief valve 31, the spacer 35, the tubular partition wall 38, and the expansion-side relief valve 30 configured as described above are attached in that order to the small diameter portion 3a of the piston rod 3. The spacer 17, the contraction-side leaf valve 7, the piston 2, and the expansion-side leaf valve 6 are then attached to the small diameter portion 3a in that order, whereupon the annular piston nut 40 is screwed to the screw portion 3b. As a result, the valve stopper 16, the contraction-side leaf valve 31, the spacer 35, the tubular partition wall 38, the expansion-side relief valve 30, the spacer 17, the contraction-side leaf valve 7, the piston 2, and the expansion-side leaf valve 6 are fixed to the small diameter portion 3a of the piston rod 3.

A rebound stopper 41 that impinges on the head member 12 so as to prevent further expansion of the shock absorber D3 when maximally expanded is provided on an upper side, in FIG. 4, of the small diameter portion 3a of the piston rod 3 so that the expansion-side relief valve 30 and the contraction-side relief valve 31 are disposed between the rebound stopper 41 and the piston 2.

The shock absorber D3 configured as described above operates in a similar manner to the shock absorber D1 such that when the piston speed is in the high speed region, the expansion-side relief valve 30 and the contraction-side relief valve 31 open, thereby suppressing excessive damping force.

Moreover, even when the vibration damping ability obtained when the piston speed is in the low speed region is increased, excessive damping force while the piston speed is in the high speed region can be suppressed independently thereof. Hence, the vehicle body attitude can be stabilized reliably while the piston speed is in the low speed region, and vibration occurring when the vehicle passes over a projection or a recess during travel can be isolated so that transmission of the vibration to the vehicle body can be suppressed.

Likewise with the shock absorber D3 according to the present embodiment, therefore, passenger comfort can be realized in the vehicle in all speed regions. Furthermore, since the shock absorber D3 employs an identical structure to the shock absorber D1, corresponding actions and effects are obtained.

Incidentally, in the shock absorber D3, the piston rod 3 is axially supported by the head member 12, and therefore, when the piston 2 connected to the tip end of the piston rod 3 slides against the cylinder 1 so as to receive force (lateral force) from a lateral direction, the lateral force is received by the head member 12 and the piston 2. Hence, a certain fitting length must be secured from the head member 12 to the piston 2, and therefore, by ensuring that the rebound stopper 41 contacts the head member 12 so that the shock absorber D3 does not expand any further, a minimum required fitting length is secured. As a result, a length from the rebound stopper 41 to the piston 2 does not contribute to the stroke length of the shock absorber D3.

In the shock absorber D3, the expansion-side relief valve 30 and the contraction-side relief valve 31 are attached further toward the expansion-side chamber R1 side than the piston 2, and are therefore accommodated within a range of the minimum required fitting length from the head member 12 to the piston 2. As a result, the expansion-side relief valve 30 and the contraction-side relief valve 31 can be provided without affecting the stroke length of the shock absorber D3.

In other words, by ensuring that the expansion-side relief valves 30 and the contraction-side relief valve 31 are accommodated between the rebound stopper 41 and the piston 2, the expansion-side relief valve 30 the contraction-side relief valve 31 can be provided without sacrificing the stroke length of the shock absorber D3 even slightly, and as a result, an overall length of the shock absorber D3 is not affected at all.

In the shock absorber D3, therefore, the expansion-side relief valve 30 and the contraction-side relief valve 31 can be provided without sacrificing the stroke length of the shock absorber D3, and moreover, the overall length of the shock absorber D3 does not increase.

Furthermore, a hole communicating with the shared passage 32 does not have to be provided between the valve stopper 16 the rebound stopper 41, and therefore an overall length of the piston rod 3 can be shortened in comparison with the shock absorber D1 and the shock absorber D2, enabling a corresponding reduction in the overall length of the shock absorber D3.

Hence, with the shock absorber D3 according to the present embodiment, by providing the expansion-side bypass passage 50, the contraction-side bypass passage 51, the expansion-side relief valve 30, and the contraction-side relief valve 31, the stroke length can be secured while improving the passenger comfort of the vehicle, and installation in the vehicle can be achieved more easily.

Although not shown in the figures, the shock absorber D3 may also be structured such that the expansion-side relief valve 30 and the contraction-side relief valve 31 are disposed in reverse and attached in opposite directions.

In the respective embodiments described above, the piston speed is divided into a low speed, a medium speed, and a high speed for convenience in order to describe the operations of the expansion-side leaf valve 6, the contraction-side leaf valve 7, the expansion-side relief valves 9, 30, and the contraction-side relief valves 11, 31. Boundary speeds between these divisions are set at speeds at which the expansion-side leaf valve 6, the contraction-side leaf valve 7, the expansion-side relief valves 9, 30, and the contraction-side relief valves 11, 31 respectively open, and the respective boundary speeds between the low speed, the medium speed, and the high speed do not have to be set identically on the expansion-side and the contraction-side. Accordingly, the respective valve opening pressures of the expansion-side leaf valve 6, the contraction-side leaf valve 7, the expansion-side relief valves 9, 30, and the contraction-side relief valves 11, 31 may be set as desired.

Embodiments of the present invention were described above, but the above embodiments are merely examples of applications of the present invention, and the technical scope of the present invention is not limited to the specific constitutions of the above embodiments.

With respect to the above description, the contents of application No. 2012-214414, with a filing date of September 27, 2012 in Japan, are incorporated herein by reference.

## Claims

1. A shock absorber comprising:
a cylinder;
a piston that is inserted into the cylinder slidably and divides an interior of the cylinder into an expansion-side chamber and a contraction-side chamber;
a piston rod that is inserted into the cylinder movably and connected to the piston;
an expansion-side passage that allows a fluid to flow only from the expansion-side chamber toward the contraction-side chamber;
a contraction-side passage that allows the fluid to flow only from the contraction-side chamber toward the expansion-side chamber;
an expansion-side damping valve that applies resistance to a flow of fluid passing through the expansion-side passage;
a contraction-side damping valve that applies resistance to a flow of fluid passing through the contraction-side passage;
an expansion-side bypass passage that connects the expansion-side chamber to the contraction-side chamber while bypassing the expansion-side passage;
an expansion-side relief valve that is provided midway in the expansion-side bypass passage, and is opened by pressure in the expansion-side chamber so as to open the expansion-side bypass passage;
a contraction-side bypass passage that connects the expansion-side chamber to the contraction-side chamber while bypassing the contraction-side passage; and
a contraction-side relief valve that is provided midway in the contraction-side bypass passage, and is opened by pressure in the contraction-side chamber so as to open the contraction-side bypass passage.

2. The shock absorber as defined in Claim 1, wherein a valve opening pressure of the expansion-side relief valve is set to be higher than a valve opening pressure of the expansion-side damping valve, and a valve opening pressure of the contraction-side relief valve is set to be higher than a valve opening pressure of the contraction-side damping valve.

3. The shock absorber as defined in Claim 1, wherein the expansion-side relief valve comprises:
an expansion-side valve disc that includes an expansion-side bypass port and is attached to an outer periphery of the piston rod; and
an expansion-side valve body laminated onto the expansion-side valve disc in order to open and close the expansion-side bypass port,
the contraction-side relief valve comprises:
a contraction-side valve disc that includes a contraction-side bypass port and is attached to the outer periphery of the piston rod; and
a contraction-side valve body laminated onto the contraction-side valve disc in order to open and close the contraction-side bypass port,
the piston rod comprises a shared passage that communicates with one of the expansion-side chamber and the contraction-side chamber,
the expansion-side bypass passage is formed to include the shared passage and the expansion-side bypass port, and
the contraction-side bypass passage is formed to include the shared passage and the contraction-side bypass port.

4. The shock absorber as defined in Claim 3, wherein the piston is attached to the outer periphery of the piston rod,
the expansion-side relief valve is attached to the outer periphery of the piston rod further toward the contraction-side chamber side than the piston,
the contraction-side relief valve is attached to the outer periphery of the piston rod further toward the contraction-side chamber side than the expansion-side relief valve,
the piston, the expansion-side relief valve, and the contraction-side relief valve are fixed to the piston rod by a piston nut that is screwed to a tip end of the piston rod, and
the contraction-side valve body is laminated onto the expansion-side chamber side of the contraction-side valve disc.

5. The shock absorber as defined in Claim 1, wherein the piston is attached to an outer periphery of the piston rod, and
the expansion-side relief valve and the contraction-side relief valve are attached to the outer periphery of the piston rod further toward the expansion-side chamber side than the piston.
